# EUROPEAN PATENT APPLICATION

(11) **EP 3 933 731 A1**
(43) Date of publication of application: **05.01.2022**
(21) Application number: 20183055.1
(22) Date of filing: 30.06.2020
(51) Int. Cl.: G06Q 20/00

(54) **AUTHORIZATION DATA PROCESSING FOR MULTIPLE ISSUERS**

(71) Applicant: Mastercard International Incorporated, Purchase NY 10577 (US)
(72) Inventor: TIERNEY, John, Wirrall, Merseyside CH60 7TF (GB); NOË, James Christian, West Wickham, BR4 0BL (GB); COWEN, Michael John, London, W2 3DW (GB)
(74) Representative: Gill Jennings & Every LLP

(57) **Abstract**

The invention provides systems and methods capable of effecting payment with a payment account that is different to the payment account associated with a payment device that initiated a payment transaction. An authorisation request message is modified by the invention to replace a cryptogram associated with the payment device with a cryptogram associated with the payment account that payment is to be taken from. A user may use a mobile communication device to communicate with a server storing associations between payment devices, such that the server can be consulted by a payment network server to determine which cryptogram to generate when modifying the authorisation request.

## Description

### FIELD OF INVENTION

This invention relates to generation and validation of authorization data, and particularly the process of generating and validating authorisation data where the intended recipient is uncertain at the point of generation.

### BACKGROUND

When sending electronic communications, such as electronic messages sent during payment transaction authorizations, it is desirable to provide a means of verifying that the contents of the communication have not been interfered with by a malicious party. In particular, it is important that a receiving party who wishes to make decisions based on the contents of the electronic communication can verify that the originator of the communication is who they claim to be, and that the receiving party can verify the integrity of the communication, i.e. that the contents of the communication have not been altered or replayed after being generated by the legitimate originator.

In the context of electronic payments, a card issuer may wish to verify that a transaction authorization request received through a payment network originates from the legitimate holder of a bank account and that the details included in the request have not been altered or reused. EMV^{™} standards specify processes that allow such verification to be performed during electronic payments.

Payment devices, such as integrated circuit cards (ICCs) that are issued by card issuers, may be used to initiate transactions and provide EMV^{™} level cryptographic security for the transaction. ICCs have cryptographic capabilities allowing the card issuer to verify the integrity and origin of messages using cryptograms generated by the ICC. A cryptographic tool, such as one key of a symmetric key pair, stored securely on the card may be used by the card to generate a cryptogram relating to the transaction details which are included in a transaction request that is sent to the issuer of the ICC. The issuer may verify the cryptogram on receipt of the authorization message by regenerating the cryptogram based on the transaction details and a cryptographic key corresponding to the cryptographic key securely stored on the ICC. For example, a symmetric key pair derivable by the ICC and the issuer can be used to generate identical cryptograms when acting on identical transaction data. A malicious party without access to the secure key will not be able to generate a cryptogram based on fraudulent transaction details, nor can a cryptogram based on legitimate transaction details be used to verify an authorization message in which the transaction details have been modified. Thus, unless possession of the ICC or the securely stored key has been compromised, the integrity and origin of the transaction message can be verified by the issuer.

The above described steps of verifying the data in a transaction authorization require that a payment is initiated with a payment device linked to a particular issuer that is capable of generating a cryptogram that can be verified by, or on behalf of, that issuer. However, it may be desirable for a user to make payments from a number of different payment accounts that may be held at different card issuers using a single payment device. As the cryptograms generated by ICCs are typically generated using cryptographic materials specific to a given issuer, such cryptograms are not generally capable of being validated by other issuers that are not in possession of the cryptographic tools used to generate the cryptogram. As such, one ICC cannot be used securely to initiate authorization requests comprising cryptograms that can be verified from a number of issuers. Accordingly, there is a need for a method of generating and verifying authentication data that can allow a single payment device to provide cryptographic data to a number of issuers.

### SUMMARY OF THE INVENTION

In a first aspect, the invention provides a computer-implemented cryptographic authorization method performed at a server of a transaction processing system, comprising: receiving a first authorization request initiated at a merchant point of sale, POS, terminal by a payment device, the authorization request comprising transaction details and a main cryptogram, the main cryptogram being based on the transaction details and a main cryptographic tool associated with a main issuer determining, by the data processing server, a selection of a secondary issuer stored on a credential selection server; generating an updated authorization request message based on the first authorization request message, wherein the updated authorization request messages comprises a secondary cryptogram generated with a secondary cryptographic tool associated with the secondary issuer; and sending the updated authorization request to a server of the secondary issuer.

The method may further comprise the step of validating the main cryptogram.

Validating the main cryptogram may include at least one of requesting a cryptographic tool associated with the main cryptographic tool from the main issuer, retrieving a cryptographic tool associated with the main cryptographic tool from a secure server on which it is stored, generating a cryptographic tool associated with the main cryptographic tool based on an issuer master key associated with the main issuer, or sending transaction details to a server of the main issuer for remote validation.

The transaction details may comprise any one or more of a transaction amount, a merchant name, an Application Transaction Counter (ATC) number, and an Unpredictable Number.

Each of the main cryptographic tool and the secondary cryptographic tool may be at least one of public-private key pair, a shared key, or a single use key derivable from a master key.

The payment device may be a mobile communication device, or a passive payment device.

The method may further comprise: generating the secondary cryptogram based on the secondary cryptographic tool.

In the case where the payment device is a mobile communication device, the method may further comprise: receiving, from the mobile communication device the secondary cryptogram, sent via a wireless data connection of the mobile communication device.

The secondary cryptogram may be included in a data element of the first authorization request.

The updated authorization request may indicate that the transaction is an eCommerce transaction. This may be in contrast to the first authorization request which may be classified as a contactless transaction.

In a second aspect, a computer-implemented cryptographic authorization method initiated at a mobile communication device is provided, the method comprising: communicating with a remote credential selection server, and storing on said remote credential selection server an issuer selection data structure indicating that an authorization request associated with a main issuer should be directed to a secondary issuer that is not the main issuer initiating the authorization request at a POS terminal by communicating with the POS terminal using a wireless communication element of the mobile communication device; receiving transaction details from the POS terminal via the wireless communication element; providing a main cryptogram to the POS terminal via the wireless communication element, wherein the main cryptogram is based on the transaction details and a main cryptographic tool associated with the main issuer; obtaining a secondary cryptogram associated with the secondary issuer based on transaction data and a secondary cryptographic tool; and providing the secondary cryptogram to the POS terminal or to a data processing server for incorporation into the authorization request.

The credential selection server may have access to one or more rules associated with a user. The one or more rules enable the credential selection database to select a preferred payment credential, PPAN, from a set of possible payment credentials. The one or more rules may be modifiable by the user and/or the credential selection server.

The method may further comprise obtaining the main cryptogram, wherein obtaining the main cryptogram comprises providing the transaction details to a remote server having stored thereon the main cryptographic tool and requesting the main cryptogram from the remote server.

The main cryptographic tool may be stored on the mobile communications device, either as within a secure element (SE) or a trusted execution environment (TEE) of the device, or implemented as a protected application running in the mobile device memory, and wherein obtaining the main cryptogram comprises generating the main cryptogram based on the transaction details and the main cryptographic tool.

The method may further comprise obtaining the secondary cryptogram, wherein obtaining the secondary cryptogram comprises providing the transaction details to a remote server having stored thereon the secondary cryptographic tool and requesting the secondary cryptogram from the remote server. In such a case, authentication data may be provided to the remote server in order to enable the remote server to verify the authenticity of the mobile communications device 110 and optionally also the user. The authentication data may comprise any combination of biometric data provided by the user, a PIN, a password, or a cryptogram generated using a cryptographic key associated with the mobile device. The remote server supplies the secondary cryptogram only in the case where the device 110 is successfully authenticated. In the case where user authentication is also performed, the remote server supplies the secondary cryptogram only in the case where both the device 110 and the user are successfully authenticated.

The method may further comprise obtaining the secondary cryptogram, wherein the secondary cryptographic tool is stored on the mobile communications device, either within a secure element (SE) or a trusted execution environment (TEE) of the device, or implemented as a protected application running in the mobile device memory, and wherein obtaining the secondary cryptogram comprises generating the secondary cryptogram based on the transaction details and the secondary cryptographic tool.

In a third aspect the invention provides a system comprising one or more data processing devices, the system configured to carry out any of the methods described herein.

### BRIEF DESCRIPTION OF THE DRAWINGS

Embodiments of the present invention are described below, by way of example only, with reference to the accompanying drawings, in which:
Figure 1 illustrates in schematic form a system and environment suitable for implementing aspects of the invention;
Figure 2 is a flow diagram setting out a cryptographic authentication method performed by a data processing server according to an embodiment;
Figure 3 is a flow diagram setting out a cryptographic authentication method performed by a mobile communication device according to an embodiment;
Figure 4 illustrates in schematic form the relationship between various credentials stored in the credential selection server.
Figure 5 illustrates in schematic form how cryptographic key pairs can be used by a mobile communication device and a remote payment service to securely provide a cryptogram to a merchant POS.
Figure 6 schematically illustrates various data elements in the initial authorization request and the updated authorization request.
Figure 7 is a schematic diagram of a mobile communication device suitable for use in some embodiments.
Figure 8 shows in schematic form a data processing device suitable for performing various aspects of the disclosure.

### DETAILED DESCRIPTION

In the following description aspects of the invention are at times described in the context of electronic payments. It will be appreciated however that the invention has application in contexts outside of electronic payments, specifically to any environment in which electronic communications where certainty around the identity of the transmitting party is desirable are sent to a number of potential receivers.

The present invention provides a method in which a user is able to initiate a transaction using a payment device and cryptographic tools associated with a particular issuer. The user may use a mobile application to register a selection of a payment account at a secondary issuer from which payment should be taken, where the secondary issuer may not be the particular issuer associated with the payment device. A second cryptogram associated with the second issuer, such as a cryptogram including dynamic data information as used in remote transactions as provided by the Applicant, may be generated and passed on to the secondary issuer to verify the authorization data in the transaction. The second cryptogram may be generated in accordance with a suitable specification for performing remote transactions, such as the Mastercard Digital Secure Remote Payments (DSRP) specifications.

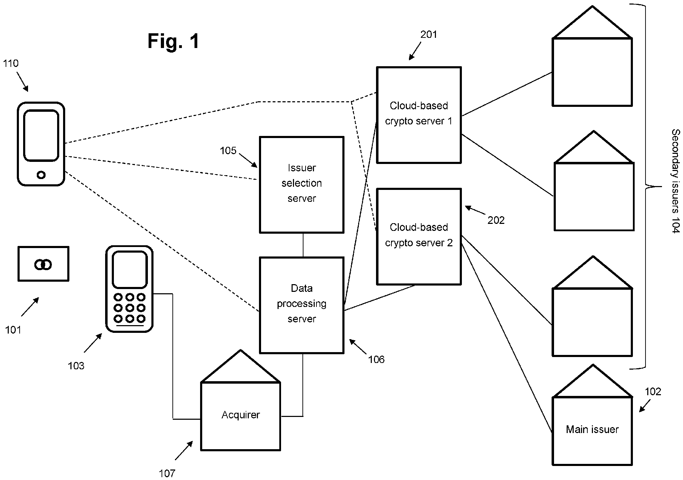

Figure 1 shows an exemplary example of a system and environment for use in some embodiments of the present invention. The system comprises a payment device 101 from which payments may be initiated in combination with a merchant POS terminal 103. Payment device 101 may be a passive payment device. An authorization request generated by the merchant POS terminal 103 is routed to a data processing server 106, which is a transaction processing server forming part of a payment processing system operated by a payment processing network such as Mastercard^{®}, for further processing. The payment device 101 comprises a wireless communication element, e.g. a near field communication (NFC) element, capable of communicating with wirelessly enabled devices. The payment device 101 further comprises a cryptographic element capable of performing cryptographic processes, preferably in line with EMV^{®} specifications.

The payment device 101 may be an integrated circuit card, ICC, a biometric card including a fingerprint sensor, or a wearable payment device such as a smart watch or a ring. The payment device 101 is linked to a payment account at an issuer 102 (hereafter "main issuer") associated with the user. The payment device 101 may have stored thereon payment credentials such as a Primary Account Number (PAN) or encrypted PAN that can be used to identify the payment account. The payment device 101 also has securely stored thereon a cryptographic tool such as a set of cryptographic keys or means for deriving cryptographic keys. The cryptographic tool is associated with a cryptographic tool of the main issuer 102 such that a cryptogram generated with the cryptographic tool of the payment device 101 can be used by the main issuer 102 of the payment device 101, or a third party acting on behalf of the main issuer 102, to verify the origin and integrity of a data element authenticated by the payment device 101. In the case where the third party performs the validation on behalf of the main issuer 102, the main issuer 102 may transmit a validation request to a server of the third party and receive a validation response from the third party. The validation response indicates whether or not the cryptogram supplied in the validation request could be verified. The third party server may have access to a cryptographic tool associated with the main issuer 102.

For example, the payment device 101 may have stored thereon a card master key derived from an issuer master key that may be used to derive a session key for generating a cryptogram (hereafter "main cryptogram") based on data supplied to the payment device 101 from a merchant POS terminal 103. The cryptogram may be verified by the issuer 102, or a party acting on behalf of the issuer 102, where the issuer 102 or the party acting on behalf of issuer 102 has access to the issuer master key and is able to derive a corresponding session key to verify the main cryptogram. The data supplied by merchant POS terminal 103 may comprise an Unpredictable Number.

The user has access to a number of payment accounts, some of which are held at institutions run by issuers (hereafter "secondary issuers") that are not the main issuer 102. The user has payment credentials relating to the accounts at the secondary issuers for identifying the accounts during payment authorizations. The user also has access to a mobile communication device 110 having a data connection, such as a 3G, 4G or 5G data connection, or WiFi data connection, allowing over the air (OTA) updates and data exchanges. In some embodiments, described in more detail below, the mobile communication device 110 may perform certain functions that are described here in relation to the payment device 101, such as generating cryptograms through interactions with a merchant POS 103.

The mobile communication device 110 has stored on its internal memory a mobile application which a user may use to make a selection of payment credentials associated with a secondary issuer 104 to which payments initiated with the payment device 101 should be directed. The mobile application stores a selection of a preferred secondary account on a credential selection database stored on a remote credential selection server 105, which may be accessed by a data processing server 106 during processing of the payment. In effect, the mobile application allows the user to specify a payment account from which funds are to be deducted as part of a transaction, where the payment account is not the same as a payment account that is linked to the payment device 101.

The credential selection database 105 may comprise a lookup table in which a secondary payment credential or identifier, such as a PAN (hereafter "preferred PAN" or "PPAN"), for a preferred account at a secondary issuer 104 is associated with the main payment credential, which may be the main PAN for an account linked to the payment device 101. The user may access the credential selection server 105 via the mobile application and update the preferred account by replacing the PPAN associated with the main PAN with a PPAN for a different account. Alternatively, the lookup table may comprise details of a number of different PPANs, each associated with a different identifier. The identifier could be provided as part of an authorization method in order to indicate to the data processing server 106 which PPAN has been selected.

The DPAN or main FPAN may act as default payment credentials to be used where no selection of secondary payment credentials has been made. The selection of a preferred secondary credential be made by the explicit choice of a set of a payment credentials from the user. In some examples, the user may indicate criteria which the data processing server 106 may use to make a selection of a preferred payment credential. For example, the user may indicate that a payment credential associated with a particular currency is used, or that a payment credential associated with an account having at least a specified amount of funds is used. In general, the user may provide criteria allowing the data processing server 106 to make a preferred credential selection based on transaction data, such as amount, currency, merchant country, merchant name etc. A set of rules may be defined that capture these requirements and enable a preferred payment credential to be selected dynamically. For example, the user may specify to the data processing server 106 that a secondary credit card should be used in preference to the default debit card in transactions with an amount that is above a certain threshold. Upon receiving a transaction request for an amount above the threshold amount, the data processing server 106 may then update the credential selection database 105 to indicate that a secondary payment credential associated with a credit card should be the preferred payment credential in this transaction.

To initiate a transaction, the POS terminal may provide transaction details to the payment device 101. The transaction details may include any combination of a transaction amount, a merchant name, an Unpredictable Number generated by the POS terminal, a transaction type indicating that the transaction is a contactless transaction made face-to-face at a POS terminal, a transaction date, and other transaction details as may be described in EMV^{®} contactless payment specifications. The user may bring the payment device 101 into the vicinity of the POS terminal 103, upon which the POS terminal 103 will provide the transaction details to the payment device 101 via a wireless communication channel, e.g. a NFC communication channel.

The payment device 101 will generate a cryptogram (hereafter "main cryptogram") based on the transaction details provided by the POS terminal 103 and further transaction details provided by the payment device 101, such as an ATC transaction counter and a PAN or tokenised PAN (DPAN) associated with the payment device 101. The main cryptogram may comprise an encrypted copy of the transaction details or an encrypted copy of a hash of the transaction details based on a cryptographic tool stored on or derivable by the payment device 101. The payment device 101 provides the cryptogram to the POS terminal 103 via the wireless communication channel. The merchant POS terminal 103 may at this stage perform an offline authentication of the payment card using static data authentication or dynamic data authentication.

The merchant POS terminal 103 generates an authorization request comprising the transaction details and the main cryptogram. The authorization request may be an electronic message formatted in accordance with the ISO 8583 standard with the main cryptogram being incorporated in data element 55. The authentication request may identify an account at the main issuer 102 using the main PAN of the payment device 101. Alternatively, the authentication request may identify an account at the main issuer 102 using a DPAN that may be mapped onto the main PAN by a tokenization service accessible by the data processing server 106.

The merchant POS 103 sends the authorization request to a server at an acquirer associated with the merchant. The acquirer 107 sends the authorization request to a data processing server 106 that forms part of a payment processing network, such as the network operated by Mastercard^{®}.

Upon receiving the authorization request, the data processing server 106 validates the main cryptogram. In order to validate the cryptogram, the data processing server 106 may generate a further cryptogram based on the transaction details included in the authorization request. If the authorization request comprises a DPAN, the data processing server 106 may be required to contact a tokenization service in order to retrieve the main PAN associated with the token in order to validate the cryptogram. If the payment processing server 106 does not have access to cryptographic tools corresponding to the cryptographic tools used to generate the cryptogram, the payment processing server 106 can contact the main issuer 102 or another service provided by a third party acting on behalf of the main issuer 102 for validation of the cryptogram. The payment processing server 106 can either request cryptographic tools suitable for validation of the cryptogram from the main issuer 102, or the payment processing server 106 can provide transaction details to the card issuer for remote validation.

The data processing server 106 accesses the credential selection server 105 in order to determine the secondary issuer 104 and PPAN that the user has selected using the mobile application.

In some examples, the data processing server 106 determines that it should access the credential selection server 105 based on whether the PAN or tokenized Digital PAN (DPAN) in the authorization message belonging to a range associated with the use of secondary issuer accounts. In some examples, the authorization message comprises a tag indicating that the PAN is associated with a number of secondary funding accounts. The data processing server 106 retrieves the PPAN associated with the account at the secondary issuer 104 selected by the user using the mobile application.

The payment processing server 106 generates an updated authorization request for sending to the selected secondary issuer 104, including the PPAN and the transaction details included in the original authorization request. Because the main cryptogram included in the original authorization request was formed using cryptographic tools stored on the payment device 101 and associated with the main issuer 102, the secondary issuer 104 is not able to verify the main cryptogram. The data processing server 106 includes a secondary cryptogram generated using cryptographic tools associated with the secondary issuer 104 such that the secondary cryptogram may be verified by a secondary issuer 102 in the updated authorization request.

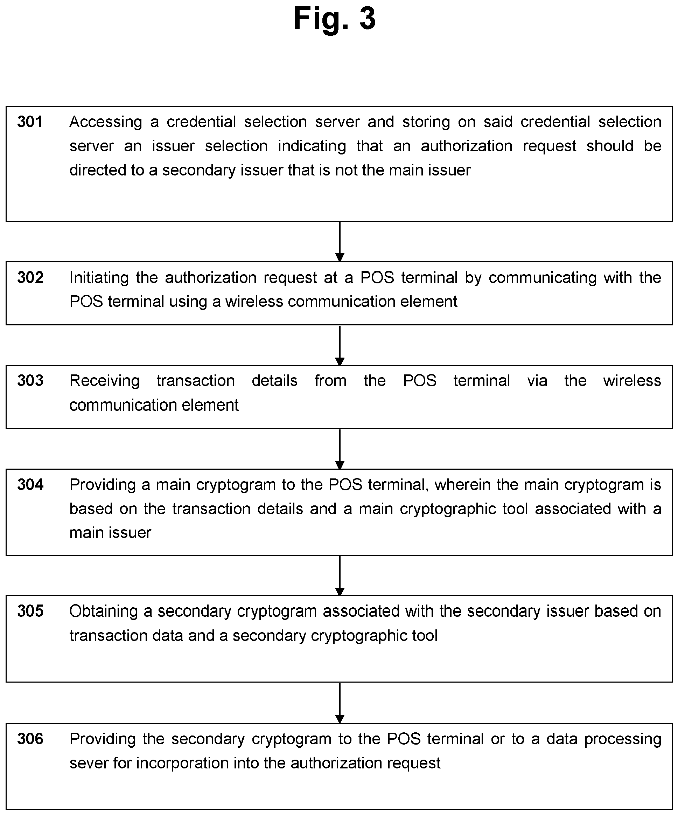

In the embodiment described in detail with reference to Fig. 3, the secondary cryptogram is generated by the mobile communications device 110 of the user and sent to the data processing server 106 for inclusion in the updated authorization request. In some examples, the secondary cryptogram may be sent by the mobile communication device 110 to the data processing server 106 by providing the secondary cryptogram to the merchant POS terminal 103 via a wireless data connection for inclusion in the original authorization request in addition to the main cryptogram. In other examples, the secondary cryptogram may be sent directly to the data processing server 106 via a wireless data connection.

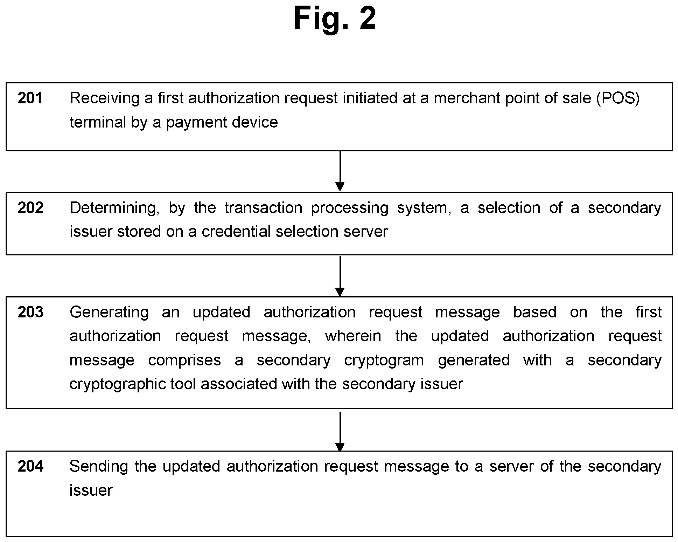

In the embodiment described in detail with reference to Fig. 2, the secondary cryptogram is generated by the data processing server 106 and included by the data processing server 106 in the authorization request. The secondary cryptogram may be generated according to a process based on an EMV^{®} standard remote payment specification, such as the Mastercard Digital Secure Remote Payment (DSRP) specification. Accordingly, when generating the updated authorization request, the data processing server 106 may modify a data element in the original authorization request indicating that the transaction occurred at a POS terminal 103 to indicate that the transaction is now categorized as an eCommerce transaction rather than a contactless transaction. This is particularly suited to the scenario where the issuer expects to obtain a main cryptogram associated with the payment device 101 where the transaction type is contactless, as no such expectation is present on the part of the issuer that a main cryptogram will be present in the authorization request.

The updated authorization request comprising the transaction details and the secondary cryptogram are sent to the secondary issuer 104 for processing. The secondary issuer 104 may validate the secondary cryptogram during processing, or may use an external service to validate the secondary cryptogram on its behalf. Sending the updated authorization request may comprise directly sending the information to a server of the secondary issuer 104, or it may include sending the authorization request to a further party for forwarding to a server of the secondary issuer 104. For example, if the secondary issuer 104 belongs to a payment network operated by a different payment network provider than the main issuer 102, the data processing server 106 may send the authorization request to a separate data processing server operated by the different payment network provider for forwarding to the secondary issuer 104. Figure 2 describes steps that are performed by the data processing server 106 during embodiments of the disclosure.

Step 201. The data processing server 106 receives a first authorization request initiated at a merchant POS terminal 103 by a payment device. The payment device may be the payment device 101 described with reference to Fig 1. The first authorization request comprises a PAN or DPAN associated with the main issuer 102, transaction details such as any combination of a payment amount, a merchant name, an Unpredictable Number generated by the POS terminal, and an ATC number. The authorization request also comprises a cryptogram that has been generated based on the transaction details and a cryptographic tool associated with the main issuer 102.

The payment device may be a contactless payment device. The payment device may be a passive payment device such as an ICC or wearable payment device. Alternatively, the payment device may be an active payment device, such as the same mobile communication device 110 used to access the credentials selection server 105.

Step 202. The data processing server 106 determines a selection of a secondary payment credential associated with a secondary issuer 104 stored on a credential selection server 105.

In some examples, the data processing server 106 determines that the main payment credential should be replaced with a secondary payment credential based on whether the main payment credential belongs to a specified range. For example, the PAN or DPAN provided in the authorization message may belong to a range that is dedicated to payments in which the main PAN is linked to various secondary PPANs. Upon receiving the main PAN orDPAN, the data processing server 106 determines that the PAN or DPAN belongs to the range linked to secondary PPANs and accesses the credential selection server 105 before further processing of the transaction. In other examples, the authorization message may comprise a tag, flag, field, etc. indicating to the data processing system 106 that it should access the credential selection server 105 to identify a secondary PAN.

The credential selection server 105 is accessible by the user via the mobile electronic device 110. The credential selection server 105 comprises data indicating that the user has chosen that transactions initiated with the main payment credential should be directed to an account at a secondary issuer 104. In some examples, the credential selection server 105 may indicate a current selection of a secondary PPAN that should be used for all transactions initiated by the payment device. In other examples, a number of secondary PPANs may be associated with various tags that could be included in the authorization messages to indicate which PPAN to use for a given transaction.

The data processing server 106 determines, based on the data stored in the credential selection server 105, which secondary payment credentials to use for the transaction. For example, by identifying a PPAN currently selected as the preferred PAN linked to the main PAN in the credential selection server 105 database, or by determining that the authorization request includes a tag shared by an entry in the credential selection server database linking a PPAN to the main PAN.

The preferred payment credential may have been specified previously by the user, e.g. using a software application or via a web-based interface provided by a browser application, or the credential selection server 105 may have access to one or more user-configurable rules that enable the preferred payment credential to be determined.

For example, the rules may specify that a default payment credential is to be used for all transactions until such time as this default payment credential is updated by the user. Alternatively, the rules may make use of transaction data such as any one or more of transaction amount, currency of transaction, merchant location, merchant name, etc. to dynamically select a preferred payment credential for a given transaction.

The credential selection server 105 may thus select the preferred payment credential based on the one or more rules, perhaps from a set of available payment credentials that could each potentially serve as the preferred payment credential for a given transaction.

The data processing server 106 may also validate the main cryptogram at this point. The data processing server 106 may validate the cryptogram either using a cryptographic tool associated with the main issuer 102 or by sending the main cryptogram and transaction details to the main issuer 102 for remote validation. The cryptographic tool associated by the main issuer 102 may be a cryptographic key corresponding to the key used by the payment device to generate the main cryptogram. The cryptographic key could be a symmetric key paired with a symmetric key stored on the payment device. The cryptographic key could be an asymmetric key paired with an asymmetric key stored on the payment device. The cryptographic key could be a limited use key or single use key derived from an issuer master key or from a card master key derived from an issuer master key. If the main cryptogram is validated by the data processing server 106 (rather than remotely), the data processing server 106 may request a cryptographic key from the main issuer 102 for use in verifying the cryptogram.

If the authorization request comprises a DPAN rather than a PAN, the data processing server 106 may also contact a tokenization service to detokenize the DPAN to retrieve a PAN.

Step 203. After determining from the credential selection server 105 that the user has selected a preferred set of payment credentials (i.e. the PPAN) for the transaction other than the credentials associated with the payment device 101, the data processing server 106 generates an updated authorization request message including the PPAN instead of the main PAN or main DPAN associated with the main issuer 102.

If the PPAN is associated with a secondary issuer 104 that is not the main issuer 102, the main cryptogram provided in the original authorization message will not generally be verifiable by the secondary issuer 104. Because the cryptographic tool used to generate the main cryptogram is unknown and not derivable by the secondary issuer 104, the secondary issuer 104 is not able to recreate the main cryptogram based on the transaction details to ensure the integrity of the transaction details, nor is the secondary issuer 104 able to verify the origin of the main cryptogram.

The data processing server 106 includes in the updated authorization message a secondary cryptogram for verification by the secondary issuer 104. The secondary cryptogram may be generated at the data processing server 106, or the secondary cryptogram may be generated remotely and provided to the data processing server 106. The secondary cryptogram may, for example, be generated by the mobile communication device 110 and provided to the data processing server 106 via an in-band or out-of-band of the authorization request via a data connection of the mobile communication device 110. In one embodiment, the mobile communication device 110 provides the secondary cryptogram to the POS terminal 103 for inclusion in the authorization request in addition to the main cryptogram.

The payment processing network, of which the data processing server 106 forms a part, may also comprise a cloud-based cryptographic server 201 (Fig. 1) that can be used to generate cryptographic data. In this example the cloud-based cryptographic server 201 is configured to generate cryptograms in accordance with a remote payment specification suitable for use in ecommerce transactions, such as DSRP. The cloud-based cryptographic server 201 comprises a secure data storage element in which cryptographic tools associated with the second issuer 104 are stored. The cryptographic tools may include issuer master keys associated with card issuers including at least the secondary issuer 104 corresponding to the PPAN selected at the credential selection server 105.

The data processing server 106 generates a secondary cryptogram based on the cryptographic tool. This may include requesting a session key or single use key based on the issuer master key and associated with the PPAN indicated by the credential selection server 105. The data processing server 106 may generate the secondary cryptogram based on the transaction details provided in the initial authorization request and the session key or single use key provided by the cloud-based cryptographic server 201. Alternatively, the data processing server 106 may provide transaction and optionally also authentication details to the cloud-based cryptographic server 201 and request a cryptogram associated with the secondary cryptographic tool in return. In some examples, a number of cloud-based cryptographic servers 202 are associated with different issuers 104.

The secondary cryptogram is included in the updated authorization request for verification by the secondary issuer 104.

Because the secondary cryptogram may be generated in accordance with eCommerce transaction protocols, the data processing server 106 may update the authorization request to indicate that the category of transaction is an eCommerce transaction. This allows the secondary issuer 104 to recognize that the transaction should be processed as an eCommerce transaction.

Step 204. The data processing server 106 sends the updated authorization request to a server of the secondary issuer 104. The secondary issuer server processes the transaction as a normal eCommerce transaction. Similarly to the case of the main issuer described earlier, the secondary issuer may validate the secondary cryptogram itself or it may use an external service to validate the secondary cryptogram on its behalf.

Fig. 3 shows steps performed by the mobile communication device 110 in embodiments of the disclosure. In the steps described below, the mobile communication device 110 acts as an active payment device and is used to initiate a payment. However, the method described below is also suitable for use in examples where the payment is initiated by a passive payment device, for example as described with reference to Fig. 2.

Step 301. A user accesses the credential selection server 105 using a mobile application run on the mobile communication device 110. The user records a selection on the credential selection server 105 indicating that transactions initiated using a first set of credentials should be directed to a secondary issuer that is not the main issuer, for fulfilment using a secondary account associated with a second set of credentials. The main set of credentials may be a main PAN associated with a payment card 101 issued by a first issuer or may be a DPAN associated with the mobile communication device 110 and the payment card 101. The second set of credentials is a PAN associated with a secondary issuer 104.

Step 302. The user initiates an authorization request at a POS terminal 103 by communicating with the POS terminal 103 using a wireless communication element of the mobile communication device 110, e.g. a NFC element.

Initiating the authorization request may comprise the user providing authentication information to the mobile communication device 110 and bringing the mobile communication device 110 into the vicinity of a wireless communication element of the POS terminal 103, e.g. an NFC antenna of the POS terminal 103. The authentication information may be a PIN entered into the mobile communication device 110 or biometric information such as a fingerprint provided to the mobile communication device 110. Transaction rules may dictate whether the user needs to provide authentication information - for example, authentication information may not be required for transactions with a value lower than a threshold value.

Step 303. The POS terminal 103 provides the mobile communication device 110 with transaction details such as any combination of a transaction amount, a merchant name, and an Unpredictable Number via the wireless communication element. The mobile communication device 110 provides further transaction data, such as an ATC number, and generates a main cryptogram based on the transaction data and a cryptographic tool associated with the main issuer 102.

The mobile communication device 110 may comprise a secure element (SE) that has stored therein cryptographic tools associated with the main set of credentials that can be used to generate the main cryptogram that may be verified by the main issuer. The mobile communication device 110 may comprise a trusted execution environment or protected application running in the mobile device memory in which cryptographic tools are stored, or the mobile communication device 110 may be capable of requesting session keys or single use keys from a cloud-based cryptographic server 202 on which issuer master keys are securely stored. In the case where the mobile communication device 110 received cryptographic information from a cloud-based cryptographic server 202, the mobile communication device 110 may be required to provide authentication data to the cloud-based cryptographic server 202 to authenticate device 110 and optionally also the user. The authentication data can include any combination of biometric data, a PIN, a password, or a cryptogram.

Step 304. The mobile communication device 110 provides the main cryptogram and further transaction data to the POS terminal 103 for sending onto an acquirer 107 and data processing server 106.

Step 305. The mobile communication device 110 obtains a secondary cryptogram associated with the secondary issuer based on the transaction data and a secondary cryptographic tool associated with the secondary issuer 104. The secondary cryptogram may be generated according a remote payment cryptogram generation protocol, such as used in DSRP.

Step 306. The mobile communication device 110 provides the secondary cryptogram to the merchant POS 103 for sending to the data processing server 106, or the mobile communication device 110 may provide the secondary cryptogram directly to the data processing server 106 using a data connection.

In some examples, the mobile communication device 110 provides an encrypted version of the secondary cryptogram to a remote payment service, such as Apple Pay^{®}. The mobile payment service decrypts the encrypted secondary cryptogram and re-encrypts the secondary cryptogram using a public key of a merchant. The encrypted secondary cryptogram is returned to the mobile communication device 110. The mobile communication device 110 sends the encrypted secondary cryptogram to the merchant, and the merchant decrypts the secondary cryptogram using a private key corresponding to the public key of the merchant. The merchant may provide the secondary cryptogram to the data processing server 106.

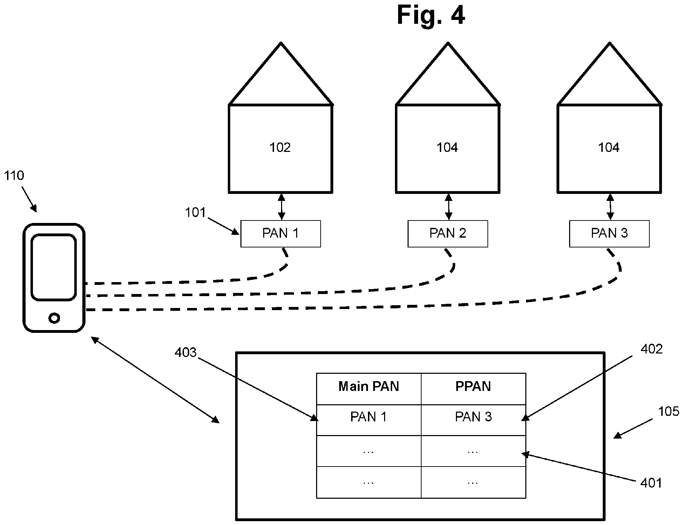

Fig. 4 illustrates the relationship between the mobile communication device 110 and various payment credentials in an example embodiment suitable for use in the above methods.

A user holds accounts and associated payment cards at a number of issuers 102, 104. The user intends to use a first payment credential, the main PAN, associated with a first issuer 102, the main issuer, to initiate transactions in relation to all of the accounts, including accounts that are associated with secondary issuers 104 that are not the main issuer.

Credential selection server 105 comprises a credential selection database 401, which indicates a preferred payment credential 402, PPAN, to be used during transactions initiated with the main PAN 403.

The user may communicate with the credential selection server 105, e.g. using mobile communication device 110, to request changes to the credential selection database 401. This enables the user to update a choice of preferred payment credential 402 to be used in payments initiated with the main payment credential 403.

The user may specify a set of criteria allowing the data processing server 106 to select a preferred payment credential. For example, the user may indicate that a payment account associated with a certain currency is used for transactions in that currency. The user may indicate that transactions below a certain threshold amount be made from a debit card, whereas transactions above a certain threshold amount be made from a credit card. Combinations of conditions for selection of a preferred payment credential are also possible.

When the data processing server 106 of the payment network provider receives an authorization request comprising the main PAN, the data processing server 106 accesses the credential selection server 105 and determines which secondary credential 402 is indicated in the credential selection database 401 as being the preferred payment credential, PPAN, associated with the received main PAN.

The data processing server 106 replaces the main PAN with the PPAN in an updated authorization message for sending to the secondary issuer 104 associated with the PPAN.

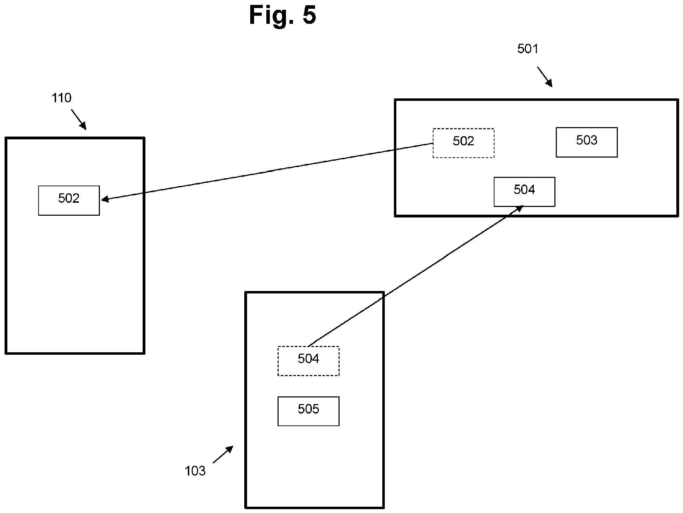

Fig. 5 illustrates schematically how the mobile communication device 110 can securely provide the secondary cryptogram to a merchant POS terminal 103 using a remote payment service 501 in some embodiments.

The user of the mobile device 110 and a merchant associated with the POS terminal 103 register with the remote payment service 501 prior to initiation of a transaction.

The remote payment service 501 generates a device public-private key pair and provides the public device key, DevPubK 502, to the mobile communication device 110. The mobile communication device 110 may securely store the DevPubK 502 at an SE or trusted execution environment of the device, or implemented as a protected application running in the mobile device memory. The remote payment service 501 stores the corresponding private key, DevPrivK 503.

The merchant or merchant POS terminal 103 generates a merchant public-private key pair. The merchant or merchant POS terminal 103 provides the merchant public key, MerchPubK 504, to the remote payment service 501. The merchant or merchant POS terminal 103 securely stores the corresponding private key, MerchPrivK 505.

When the mobile device 110 has generated a secondary cryptogram, for example using the SE or TEE of the device or using a protected application running in the mobile device memory or by requesting the secondary cryptogram from a cloud-based cryptographic server 201 as described above, the secondary cryptogram may be encrypted using DevPubK 502 and sent to the remote payment service 501. The remote payment service 501 decrypts the encrypted secondary cryptogram using DevPrivK 503. The remote payment service re-encrypts the secondary cryptogram using MerchPubK 504 and returns the encrypted secondary cryptogram to the mobile communication device 110. The mobile communication device 110 sends the encrypted secondary cryptogram to the merchant server or merchant POS terminal 103. The merchant server or merchant POS terminal 103 uses MerchPrivK to decrypt the secondary cryptogram. The secondary cryptogram is then included by the merchant server or merchant POS 103 in the authorization request in addition to the primary cryptogram.

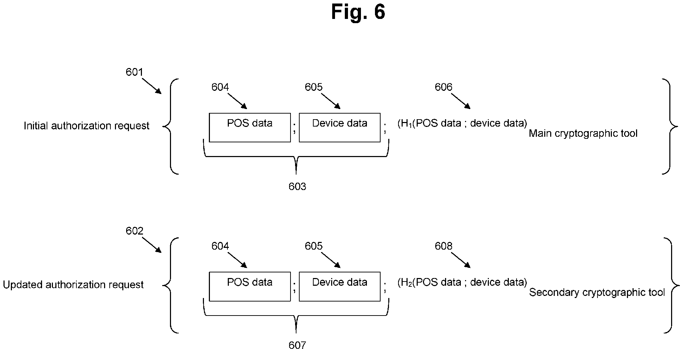

Fig. 6 illustrates how the initial authorization request 601 differs from the updated authorization request 602 after the data processing server 106 has updated the authorization request according to some embodiments of the disclosure.

The initial authorization request 601 comprises transaction details 603 including data provided by the POS, such as any combination of a payment amount, a merchant name, an Unpredictable Number and/or any other transaction details that a skilled person would understand may be provided by a POS terminal 103 to a payment device during a transaction. The transaction details further comprise further transaction details 605 provided by the payment device 101. The further transaction details 605 may comprise a PAN or DPAN associated with the payment device 101 and dynamic data generated by the transaction device.

The initial authorization 601 request further comprises a main cryptogram 606. The main cryptogram 606 may be formed by hashing the transaction details using a hashing function **H₁** and encrypting the output with a main cryptographic tool. The main cryptographic tool may be a single use key derived from a card master key associated with the main issuer and dynamic data relating to the transaction.

In the updated authorization request 602, the transaction data 607 may remain the same as the initial transaction data 603. The secondary cryptogram 608 replaces the main cryptogram 606. The secondary cryptogram 608 may be formed by hashing the transaction details 603 using a hashing function **H₂** and encrypting the output with a secondary cryptographic tool. The secondary cryptographic tool may be a single use key derived from a DSRP master key associated with the secondary issuer 104. **H₁** and **H₂** may be the same hashing function, or different hashing functions.

In some example, the transaction details 607 in the updated authorization request 602 may be different from the transaction details in the initial authorization request 601. For example, the device data in the updated transaction request may indicate the PPAN rather than the main PAN or DPAN indicated in the initial authorization request 601. In this example, the secondary cryptogram may be based on the updated transaction details rather than the original transaction details.

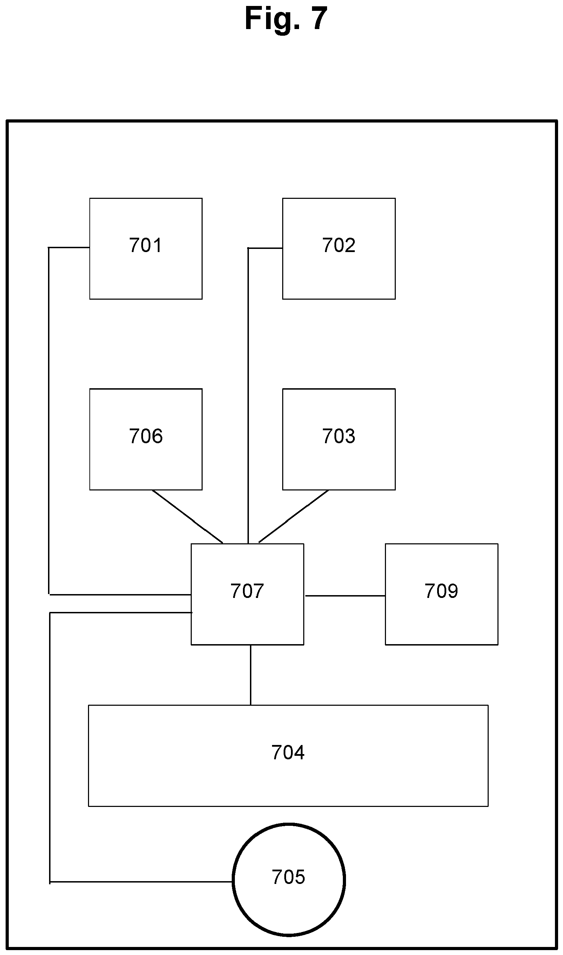

Fig. 7 shows an example of a mobile communication device 110 that is suitable for use in some embodiments of the disclosure. The skilled person will understand that various elements of the mobile communication device 110 may be replaced by similar functional elements or may not be necessary in every embodiment.

The mobile communication device 110 may comprise a secure element 701 capable of securely storing cryptographic tools, such as cryptographic keys, and performing cryptographic operations, such as deriving cryptographic keys based on master keys, generating dynamic transaction data, encrypting data, and decrypting encrypted data. In some embodiments the mobile communication device comprises a trusted execution environment or the relevant functionality may be implemented as a protected application running in the mobile device memory instead of a secure element.

The mobile communication device 110 further comprises a wireless communication element 702 capable of sending and receiving data from another device having a compatible wireless communication element. The wireless communication element 702 may be an NFC radio.

The mobile communication device 110 further comprises a data communication element 703 that is also capable of transmitting and receiving data wirelessly. The data communication element may be configured to enable 3G, 4G, 5G and/or WiFi data transfer.

The mobile communication device 110 further comprises a user interface 704 that may be used by a user to input data to the mobile communication device 110. The user interface 704 may be a touchscreen and/or one or more physical buttons, for example.

The mobile communication device 110 may further comprise a fingerprint reading element 705 capable of reading a user's fingerprint when placed on the element in order to authenticate the identity of the user.

The mobile communication device 110 further comprises memory 706 accessible by a processor 707 of the mobile communication device 110. The memory has stored thereon a mobile communication application allowing the user to access and modify the credential selection server 105 to update linked credential preferences.

The mobile communication device 110 further comprises a battery 709 providing power to the elements of the mobile communication device 110.

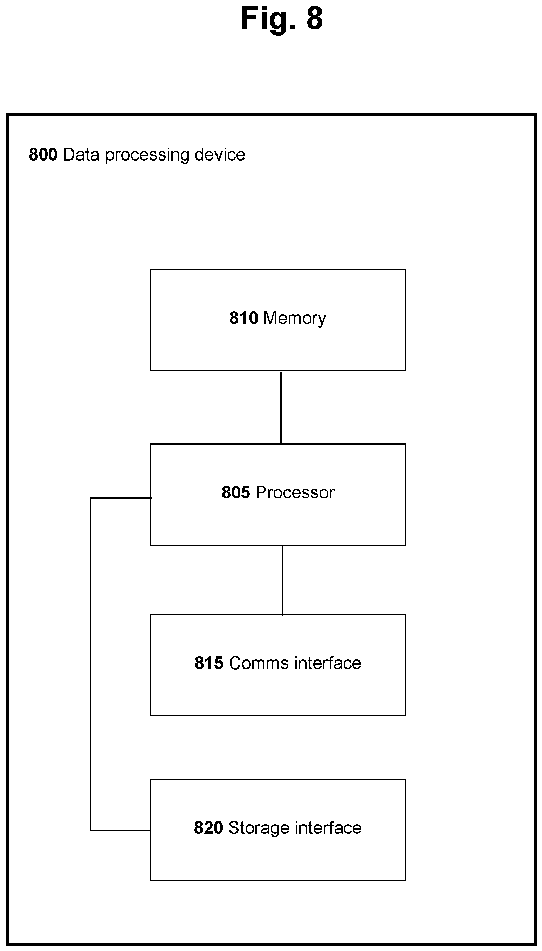

It will be apparent to a person skilled in the art that the methods described herein are all suitable for implementation by data processing devices. By way of example, Fig. 8 shows in schematic form a data processing device 800 that is suitable for performing functions of data processing server 106, mobile communication device 110, remote payment service 501, POS terminal 103, issuer selection server 105, and/or cloud based cryptographic server 201.

Data processing device 800 includes a processor 805 for executing instructions. Instructions may be stored in a memory 810, for example. Processor 805 may include one or more processing units (e.g., in a multi-core configuration) for executing instructions. The instructions may be executed within a variety of different operating systems on the data processing device 800, such as UNIX, LINUX, Microsoft Windows^{®}, etc. More specifically, the instructions may cause various data manipulations on data stored in memory 810 (e.g., create, read, update, and delete procedures). It should also be appreciated that upon initiation of a computer-implemented method, various instructions may be executed during initialization. Some operations may be required in order to perform one or more methods described herein, while other operations may be more general and/or specific to a particular programming language (e.g., C, C#, C++, Java, or other suitable programming languages, etc.).

Processor 805 is operatively coupled to a communication interface 815 such that data processing device 800 is capable of communicating with a remote device, such as another data processing device of the payment processing network.

Processor 805 may also be operatively coupled to a storage device such as storage medium 815 via storage interface 820. The storage device is any computer-operated hardware suitable for storing and/or retrieving data. In some cases, e.g. a remotely located storage medium, communication interface 815 may perform the function of storage interface 820 such that these two entities are combined.

The storage medium can be integrated in data processing device 800, or it can be external to data processing device 800 and located remotely. For example, data processing device 800 may include one or more hard disk drives as a storage device. Alternatively, where the storage device is external to data processing device 800, it can comprise multiple storage units such as hard disks or solid state disks in a redundant array of inexpensive disks (RAID) configuration. The storage device may include a storage area network (SAN) and/or a network attached storage (NAS) system.

Processor 805 can be operatively coupled to the storage device via a storage interface 820. Storage interface 820 is any component capable of providing processor 805 with access to the storage device. Storage interface 820 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 805 with access to the storage device.

Memory 810 may include, but is not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are exemplary only, and are thus not limiting as to the types of memory usable for storage of a computer program.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

While the disclosure has been described in terms of various specific embodiments, those skilled in the art will recognize that the disclosure can be practiced with modification within the spirit and scope of the claims.

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. Therefore, the methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the foregoing specification, the above-described embodiments of the disclosure may be implemented using computer programming or engineering techniques including computer software, firmware, hardware or any combination or subset thereof, wherein the technical effect is enabling sensitive data such a cryptogram to be distributed among secondary merchant data processing devices in a secure manner. Any such resulting program, having computer-readable code means, may be embodied or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

## Claims

1. A computer-implemented cryptographic authorization method performed at a server of a transaction processing system, comprising:
receiving a first authorization request initiated at a merchant point of sale, POS, terminal by a payment device, the authorization request comprising transaction details and a main cryptogram, the main cryptogram being based on the transaction details and a main cryptographic tool associated with a main issuer;
determining, by the data processing server, a selection of a secondary issuer stored on a credential selection server;
generating an updated authorization request message based on the first authorization request message, wherein the updated authorization request messages comprises a secondary cryptogram generated with a secondary cryptographic tool associated with the secondary issuer; and
sending the updated authorization request to a server of the secondary issuer.

2. The method of claim 1, further comprising the step of validating the main cryptogram.

3. The method of claim 2, wherein validating the main cryptogram includes at least one of: requesting a cryptographic tool associated with the main cryptographic tool from the main issuer, retrieving a cryptographic tool associated with the main cryptographic tool from a secure server on which it is stored, generating a cryptographic tool associated with the main cryptographic tool based on an issuer master key associated with the main issuer, sending transaction details to a server of the main issuer for remote validation; or transmitting a validation request to a third party server of a party performing validation on behalf of the main user and receiving a validation response from the third party server.

4. The method of any preceding claim, wherein the transaction details comprise any one or more of a transaction amount, a merchant name, an Application Transaction Counter, ATC, number, and an Unpredictable Number.

5. The method of any preceding claim, wherein each of the main cryptographic tool and the secondary cryptographic tool is at least one of a public-private key pair, a shared key, or a single use key derivable from a master key.

6. The method of any preceding claim, wherein the payment device is a mobile communication device, the method further comprising:
receiving, from the mobile communication device the secondary cryptogram, sent via a wireless data connection of the mobile communication device.

7. The method of any preceding claim, further comprising:
generating the secondary cryptogram based on the secondary cryptographic tool.

8. The method of any preceding claim, wherein the secondary cryptogram is included in a data element of the first authorization request.

9. The method of any preceding claim, wherein the updated authorization request indicates that the transaction is an eCommerce transaction.

10. A computer-implemented cryptographic authorization method performed at a mobile communication device, the method comprising:
communicating with a remote credential selection server, and storing on said remote credential selection server an issuer selection data structure indicating that an authorization request associated with a main issuer should be directed to a secondary issuer that is not the main issuer;
initiating the authorization request at a POS terminal by communicating with the POS terminal using a wireless communication element of the mobile communication device;
receiving transaction details from the POS terminal via the wireless communication element;
providing a main cryptogram to the POS terminal via the wireless communication element, wherein the main cryptogram is based on the transaction details and a main cryptographic tool associated with the main issuer;
obtaining a secondary cryptogram associated with the secondary issuer based on transaction data and a secondary cryptographic tool; and
providing the secondary cryptogram to the POS terminal or to a data processing server for incorporation into the authorization request.

11. The method of claim 10, further comprising obtaining the main cryptogram, wherein obtaining the main cryptogram comprises providing the transaction details to a remote server having stored thereon the main cryptographic tool and requesting the main cryptogram from the remote server.

12. The method of claim 10, wherein the main cryptographic tool is stored on the mobile communication device, either within a secure element, SE, or a trusted execution environment, TEE, of the device, or implemented as a protected application running in the mobile device memory, and wherein obtaining the main cryptogram comprises generating the main cryptogram based on the transaction details and the main cryptographic tool.

13. The method of any one of claims 10 to 12, further comprising obtaining the secondary cryptogram, wherein obtaining the secondary cryptogram comprises providing the transaction details to a remote server having stored thereon the secondary cryptographic tool and requesting the secondary cryptogram from the remote server.

14. The method of any of claims 10 to 12, further comprising obtaining the secondary cryptogram, wherein the secondary cryptographic tool is stored on the mobile communications device, either within a secure element, SE, or a trusted execution environment, TEE, of the device, or implemented as a protected application running in a memory of the mobile communication device, , and wherein obtaining the secondary cryptogram comprises generating the secondary cryptogram based on the transaction details and the secondary cryptographic tool.

15. A system comprising one or more data processing devices, the system configured to carry out the method of any preceding claim.
